Europäisches Patentamt

(19) European Patent Office

Office européen des brevets

(11) Numéro de publication: **0 329 562**
**A1**

## (12) DEMANDE DE BREVET EUROPEEN

(21) Numéro de dépôt: **89400444.9**

(22) Date de dépôt: **17.02.89**

(51) Int. Cl.⁴: **C 02 F 1/46**

(30) Priorité: **18.02.88 FR 8801946**

(43) Date de publication de la demande:
**23.08.89 Bulletin 89/34**

(84) Etats contractants désignés:
**AT BE CH DE ES GB GR IT LI LU NL SE**

(71) Demandeur: **Combe, Patrice Guy Noel
Niversac
Saint Pierre de Chignac (Dordogne) (FR)**

(72) Inventeur: **Combe, Patrice Guy Noel
Niversac
Saint Pierre de Chignac (Dordogne) (FR)**

(74) Mandataire: **Rataboul, Michel Charles
CMR INTERNATIONAL 69, rue de Richelieu
F-75002 Paris (FR)**

(54) Procédé pour le traitement de liquides tels que de l'eau, notamment de piscines, dispositif pour sa mise en oeuvre et installation obtenue.

�̂57 ·L'invention concerne un procédé de traitement permanent d'un liquide tel que de l'eau en vue de sa purification par émission in situ d'ions métal à partir d'électrodes plongées dans un courant de ce liquide et portées à des potentiels électriques différents.

Il est caractérisé en ce que l'on fait varier la tension électrique entre les électrodes 215-216 et 234-235 en fonction de deux paramètres qui sont respectivement la résistance électrique instantanée du liquide et la distance linéaire relative séparant les surfaces des électrodes en présence 215-216 et 234-235, afin qu'à chaque instant la tension électrique entre les électrodes 215-216 et 234- 235 soit telle que le courant reste sensiblement constant et que l'émission d'ions métal dans le liquide reste sensiblement égale à une valeur prédéterminée.

De préférence, on fixe une valeur au courant électrique et l'on fait varier sa tension en fonction des variations de la résistance existant entre les électrodes 215-216 et 234-235.

Ce procédé s'applique à la purification et à la stérilisation de liquides tels que de l'eau ou du lait et, en particulier, au traitement de l'eau des piscines en supprimant tout emploi de produits chimiques.

FIG.1

EP 0 329 562 A1

## Description

## PROCEDE POUR LE TRAITEMENT DE LIQUIDES TELS QUE DE L'EAU, NOTAMMENT DE PISCINES, DISPOSITIF POUR SA MISE EN OEUVRE ET INSTALLATIONS OBTENUE .

La présente invention concerne un traitement électrophysique de liquides par émission in situ d'ions métal, généralement cuivre et argent, particulièrement bien adapté à l'eau des piscines publiques ou privées mais ce traitement est également applicable au lait en vue de sa conservation et de sa consommation, à des eaux destinées à la consommation humaine ou animale, à l'élevage d'animaux aquatiques, à l'obtention de fertilisants, etc. Néanmoins, pour illustrer l'invention on ne retiendra ici que le seul exemple des piscines.

Lors de la création d'une piscine, les éléments déterminants sont essentiellement d'ordre économique immédiat et esthétique : emplacement, dimensions, choix des matériaux, couleurs, équipement, environnement paysager etc.

Il suffit de quelques jours pour s'apercevoir que la préoccupation dominante est la surveillance et la maintenance de la qualité de l'eau car celle-ci est constamment menacée : apparition d'algues, troubles, odeurs déplaisantes, sans même évoquer les risques plus graves tenant à l'impureté bactériologique.

Une piscine en plein air voit son eau profondément affectée par les changements de saison, les variations de température, la pluie, l'orage, un vent chargé de poussières et, ce qui est moins immédiatement perceptible, par la qualité de l'eau d'alimentation qui vient parfois d'assez loin et dont on ne réalise pas toujours qu'elle a des caractéristiques physico-chimiques changeantes dues à des conditions diverses : le cours d'eau naturel dans lequel elle est pompée a un niveau variable et draîne avec lui plus ou moins de produits acides ou basiques, une pluie d'orage intervenue plusieurs heures ou plusieurs jours avant a modifié son état et il ne s'agit ici que des quelques exemples les plus fréquents. Il est évident que le maintien des qualités de l'eau est très difficile à réaliser en pratique car les utilisateurs de piscines sont toujours très exigeants et veulent disposer constamment d'une eau non seulement stérile sur le plan biologique mais aussi pure, cristalline, douce, insipide et inodore. Même en cas d'absence prolongée, l'utilisateur entend avoir une eau irréprochable.

L'eau d'arrivée (eau d'alimentation) est d'abord filtrée mais les filtres, généralement à sable, ne peuvent arrêter que les grosses impuretés : particules de dix microns au moins alors que virus et bactéries mesurent au plus trois microns et souvent moins d'un micron. Puisqu' ils passent é travers les filtres, il faut les tuer afin de stériliser l'eau avant son introduction dans la piscine.

Pour cela, on sait depuis longtemps utiliser des produits chimiques tels que le chlore ou le brome que l'on introduit dans l'eau en amont de la piscine et, sauf absence prolongée du propriétaire ou du personnel d'entretien, il est théoriquement possible de porter une attention constante à l'eau d'arrivée, de l'analyser et d'en mesurer les paramètres à chaque instant pour rectifier en conséquence les apports chimiques en sélectionnant divers produits et en dosant chacun d'eux avec soin.

Dans la réalité, cette surveillance constante est impossible à envisager sérieusement et le minimum de surveillance, d'analyse et de mesure est déjà considéré comme fastidieux et pénible.

Mais, surtout, l'utilisation de produits chimiques est de moins en moins acceptée, pour le traitement de l'eau des piscines en particulier, car elle est ressentie comme non naturelle et, selon la sensibilité réelle ou imaginaire des usagers, elle peut se limiter à des désagréments : mauvais goût, odeur déplaisante, ou provoquer des réac tions plus graves : irritation de la peau, des muqueuses, des yeux, allergies, détérioration des cheveux, maux d'estomac, vomissements, etc.

En outre, l'utilisation de produits chimiques suppose l'ajout régulier de doses plus ou moins importantes mais qui, de toutes façons, provoquent des dépenses inévitables non négligeables. On compte qu'en dix ans les dépenses d'entretien équivalent à la moitié du prix de construction. Une petite piscine de 10 mètres de long et 5 mètres de large nécessite, en France, un entretien qui coûte annuellement :
- US dollars 385 si l'eau est traitée au chlore,
- US dollars 606 si l'eau est traitée avec un polymère d'hexaméthylène biguanide,
- US dollars 615 si l'eau est traitée au brome.

Devant ces inconvénients, on a déjà pensé à utiliser d'autres procédés que l'addition de produits chimiques.

C'est ainsi que l'on utilise depuis quelques années un procédé électrophysique par lequel on disperse dans l'eau des ions métal, généralement cuivre et argent. Ce procédé est la mise en oeuvre pratique d'un phénomène mis en évidence à la fin du XIXème siècle, selon lequel d'infimes quantités de métaux ont des effets puissants sur les bactéries, algues et champignons. On dit qu' ils sont "oligodynamiques" (de "oligo", petit et "dynamos", force).

Le procédé électrophysique consiste à plonger deux électrodes métalliques dans l'eau et à les porter à des potentiels électriques différents afin de provoquer, par arrachements microscopiques, l'émission d'ions du même métal que celui de l'électrode dont il est issu.

Il n'est pas nécessaire de décrire ici les mécanismes physiologiques mis en jeu car ils sont bien connus en soi. Il faut seulement rappeler que les ions métal cuivre (Cu) et argent (Ag) provoquent l'anéantissement des bacté ries, algues et champignons vite et efficacement quand une certaine concentration est atteinte et que l'on évalue à environ 0,2 à 1 PPM (partie par million) pour le cuivre et 10 PPB (partie par milliard) pour l'argent.

Concrètement, le circuit d'eau d'un bassin tel qu'une piscine est essentiellement un circuit fermé avec recyclage total ou partiel de l'eau extraite.

L'alimentation en eau pure comprend une arrivée complexe qui sera décrite ci-après, une pompe de mise en mouvement, un filtre et au moins une arrivée débouchant dans le bassin, généralement sous sa surface mais que l'on peut aussi réaliser par chute, notamment sous forme d'une cascade par exemple. L'arrivée est dite "complexe" parce qu'elle comporte au moins trois conduits distincts : un conduit provenant d'une bonde située au fond du bassin, un conduit provenant d'au moins une bonde (généralement appelée "skimmer") située au bord du bassin, à la manière d'un trop-plein et un conduit provenant d'une source extérieure.

Le procédé électrophysique est appliqué en aval de la pompe et en amont du filtre pour provoquer la floculation des matières en suspension, la rétention des flocs par le filtre et la destruction des micro-organismes créateurs d'algues et de mousses. Sur un conduit qui relie ces deux organes, on intercale un vase d'ionisation dans lequel se trouvent les électrodes qui sont "léchées" par l'eau en mouvement, laquelle se charge d'ions métal dégagés sous l'effet du courant électrique continu basse tension conduit aux électrodes par des fils isolés reliant lesdites électrodes à une alimentation située dans un boîtier.

Les installations de ce type qui existent actuellement ne donnent pas entière satisfaction pour les raisons suivantes :

L'eau emportant les ions métal arrachés aux électrodes, celles-ci s'usent et doivent être remplacées régulièrement. Or, cette usure a pour conséquence d'augmenter corrélativement la distance qui les sépare. Il en résulte une augmentation régulière, de nature exponentielle, de la résistance électrique considérée entre les électrodes. En outre, même si l'on prend soin d'inverser réguliérement la polarité des électrodes, il se produit des effets d'entartrage et d'encrassage qui troublent le fonctionnement normal et régulier du système. La surveillance de l'état des électrodes est donc une sujétion qui s'impose a l'utilisateur et qu'il ressent comme d'autant plus pénible que l'accès aux électrodes est plus difficile : accès visuel pour leur vérification et accès physique pour leur remplacement ou pour le nettoyage du vase d'ionisation.

Parallèlement, interviennent de manière tout à fait aléatoire les phénomènes rappelés ci-dessus (pluie, variations de température, orage, etc.) qui ont une influence directe sur la résistivité électrique de l'eau.

La conjonction de ces deux facteurs est actuellement la cause d'importantes variations absolument incontrôlables de la concentration d'ions métal dans l'eau.

Le dégagement d'ions anarchique déstabilise la concentration voulue (0,5 PPM pour l'ensemble des deux métaux) et peut conduire à des désagréments importants : taches noirâtres sur les parois du bassin quand il y a excès de cuivre, absence de sécurité, risque pathologique quand il y a carence d'ions.

La présente invention remédie à tous les inconvénients ci-dessus en permettant au système de s'adapter à tous les changements intervenant dans les conditions d'emploi et en procurant à l'usager un très grand confort physique et moral : surveillance réduite à l'extrême, sécurité de fonctionnement, facilité de maintenance, suppression de tous produits chimiques, exceptionnelle qualité de l'eau assurée constamment, maintien des conditions optimum même en cas d'absence prolongée, etc.

A cette fin, l'invention a pour objet un procédé de traitement permanent d'un liquide tel que de l'eau en vue de sa purification par émission in situ d'ions métal à par tir d'électrodes plongées dans un courant de ce liquide et portées à des potentiels électriques différents, caractérisé en ce que l'on fait varier la tension électrique entre les électrodes en fonction de deux paramètres qui sont respectivement la résistance électrique instantanée du liquide et la distance linéaire relative séparant les surfaces des électrodes en présence, afin qu'à chaque instant la tension électrique entre les électrodes soit telle que le courant reste sensiblement constant et que l'émission d'ions métal dans le liquide reste sensiblement égale à une valeur prédéterminée.

Selon d'autres caractéristiques de ce procédé :
- on fixe une valeur au courant électrique et l'on fait varier sa tension en fonction des variations de la résistance existant entre les électrodes;
- pour l'obtention rapide d'une ionisation optimum, on fixe la valeur du courant électrique d'abord au maximum possible, quelle que soit la résistance existant entre les électrodes et quelles que soient les variations de cette résistance, puis l'on diminue la valeur du courant électrique pour la ramener à celle qui est nécessaire au maintien de l'ionisation optimum dans les conditions d'utilisation normale et pour des valeurs médianes de la résistance et de la tension électriques;
- on abaisse la tension d'un courant électrique d'arrivée au moyen d'une alimentation à réglage automatique entre deux valeurs limites correspondant à une valeur sensiblement constante du courant résultant appliqué aux électrodes et dépendant de la valeur instantanée aléatoirement variable de la résistance existant entre les électrodes;
- le liquide étant maintenu en mouvement par extraction de liquide à traiter hors d'une capacité telle qu'un bassin et par introduction corrélative de liquide traité en vue du maintien du liquide à un niveau sensiblement constant dans le bassin, le traitement est appliqué en aval d'une pompe destinée à l'adduction de liquide au bassin;
- les électrodes sont faites en un alliage uniforme de cuivre et d'argent dans des proportions qui correspondent à celles désirées pour le traitement du liquide par une seule émission d'ions résultant d'un seul et même courant;
- on procède à deux émissions d'ions distinctes, une émission avant filtration et une émission après filtration;
- l'émission d'avant filtration est réalisée avec des électrodes de cuivre sans argent;
- l'émission d'après filtration est réalisée avec des électrodes d'argent sans cuivre;
- les deux émissions d'ions sont obtenues par des jeux d'électrodes ayant chacun une alimentation électrique distincte avec ses propres caractéristiques de courant.

L'invention a également pour objet un dispositif pour la mise en oeuvre du procédé ci-dessus, caractérisé en ce qu' il comprend un ensemble de contrôle avantageusement placé dans un boîtier et constitué par des circuits et composants électriques et électroniques reliés d'une part à une source de courant et d'autre part à au moins un jeu d'électrodes placé dans au moins un vase dit "vase d'ionisation" muni d'une entrée et d'une sortie pour un liquide à traiter, cet ensemble comprenant une alimentation à tension de sortie automatiquement variable selon la résistance instantanée existant entre les électrodes, afin que la valeur du courant d'alimentation soit et demeure sensiblement constante.

Selon d'autres caractéristiques de ce dispositif:
- les circuits comprennent un organe de réglage de la valeur désirée pour le courant d'alimentation des électrodes;
- l'ensemble de contrôle comprend des moyens en soi connus destinés à fournir au moins une tension sensiblement constante destinée au fonctionnement propre de l'ensemble et au moins une tension variable destinée à l'alimentation d'électrodes;
- l'ensemble de contrôle comprend au moins deux branches d'alimentation, l'une aboutissant à au moins une alimentation ayant une tension de sortie sensiblement constante destinée au fonctionnement propre de l'ensemble et au moins une autre aboutissant à au moins une alimentation ayant une tension de sortie variable destinée à l'alimentation d'électrodes;
- il comprend au moins deux vases d'ionisation placés sur un conduit d'adduction de liquide à un bassin, respectivement en amont et en aval d'un filtre;
- le vase d'ionisation placé en amont du filtre contient des electrodes de cuivre sans argent;
- le vase d'ionisation placé en aval du filtre contient des électrodes d'argent sans cuivre;
- il comporte des moyens de mesure du pH du liquide à traiter;
- les moyens de mesure du pH sont associés à un indicateur et éventuellement à une alarme;
- les moyens de mesure du pH sont associés à au moins un mécanisme tel qu'une électro-vanne contrôlant la distribution, dans le liquide à traiter, de produits relatifs au maintien du pH du liquide à une certaine valeur;
- il comporte au moins un vase d'ionisation pour un nombre impair d'électrodes;
- les électrodes sont disposées selon une ligne;
- il comporte au moins un vase d'ionisation pour au moins trois électrodes;
- les électrodes sont disposées aux sommets d'un polygone virtuel;
- les électrodes sont disposées selon au moins deux lignes parallèles et en quinconce;
- les électrodes étant en nombre pair, elles sont disposées selon un parallèlogramme virtuel;
- chaque électrode présente au moins un logement ouvert destiné à recevoir une fiche mâle reliée à un conducteur électrique;
- le contour de l'électrode présente une symétrie polaire par rapport au logement;
- l'électrode ayant une forme oblongue, le logement débouche dans l'axe d'au moins l'une des extrémités de l'électrode;
- la partie supérieure de chaque électrode est solidaire d'un support isolant destiné à la relier à un vase d'ionisation;
- chaque électrode presente au moins une partie de sa surface extérieure non lisse devant être recouverte par une partie du support qui y est fixée, notamment par surmoulage d'une matière synthétique;
- le support possède d'une part un manchon inférieur fixé à l'électrode et dont la face extérieure est munie d'un pas de vis et, d'autre part, une partie supérieure qui est creuse selon un contour correspondant à la section extérieure d'un outil de manoeuvre;
- le support possède une partie supérieure annulaire mâle destinée à être recouverte par une jupe élastique de forme correspondante prévue autour d'une fiche mâle, sur un embout solidaire d'un conducteur électrique relié à la fiche;
- le vase d'ionisation présente, pour chaque électrode, un orifice surmonté d'une colerette destinée à être recouverte par une coiffe élastique que présente le support d'électrode.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique d'ensemble montrant une piscine ayant une installation conforme au procédé et au dispositif conformes à l'invention.

La figure 2 est une vue schématique partielle d'une installation conforme à l'invention et ayant deux vases d'ionisation placés respectivement en amont et en aval d'un filtre.

La figure 3 est un schéma d'un ensemble de contrôle conforme à l'invention.

La figure 4 est une vue schématique d'un coffret équipé selon l'invention

La figure 5 est un schéma illustrant le phénomène d'ionisation d'un liquide à partir de deux électrodes habituelles, selon l'état de la technique.

La figure 6 est un schéma illustrant l'émission d'ions avec deux électrodes habituelles, selon l'état de la technique.

La figure 7 est un schéma illustrant l'émission d'ions avec quatre électrodes habituelles, selon l'état de la technique.

Les figures 8 à 13 sont des schémas illustrant l'émission d'ions avec des électrodes disposées conformément à l'invention, selon plusieurs variantes.

La figure 14 est une vue schématique partielle montrant la constitution d'une électrode conforme à l'invention.

La figure 15 est une vue schématique en coupe d'un vase d'ionisation conforme à l'invention avec une électrode conforme à l'invention mise en place et une autre en cours de mise en place et de connexion.

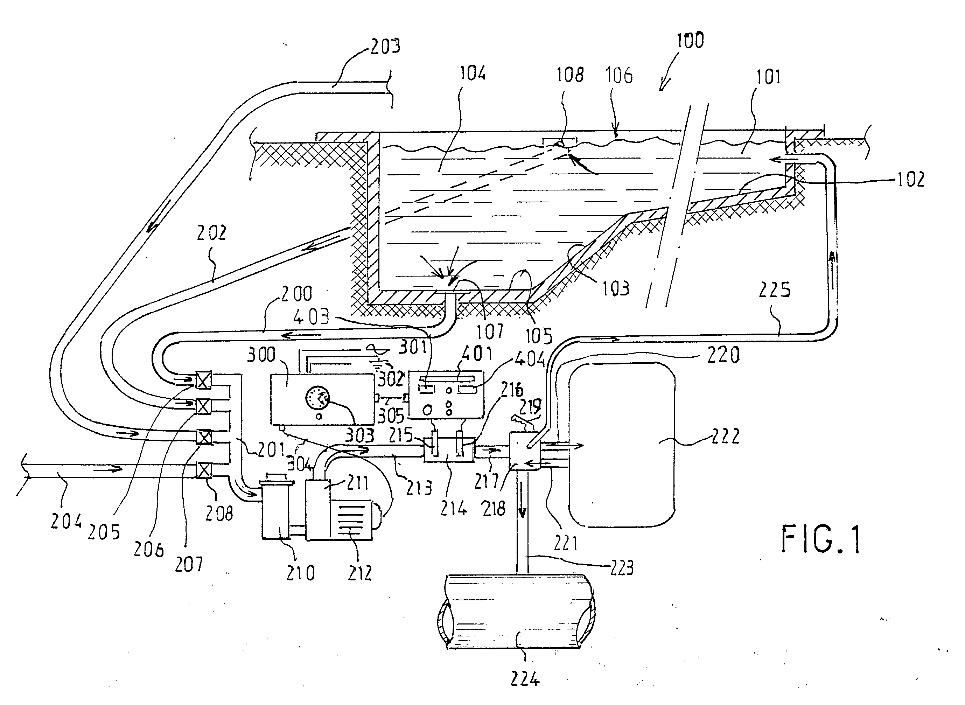

En se reportant à la figure 1, on voit une installation conforme à l'invention appliquée à une piscine.

La piscine 100 est représentée en coupe selon une forme théorique assez fréquente pour les bassins de petites dimensions : un "petit bain" 101 avec un fond 102 assez haut et légérement incliné, puis une pente assez raide 103 pour un "grand bain" 104 dont le fond 105 a une profondeur d'au moins deux mètres par rapport au niveau de l'eau 106 et qui permet de nager sans "avoir pied", de plonger, etc.

Le fond 105 est parfois concave, à quatre pentes par exemple, afin de favoriser la migration vers le centre des particules tombées au fond (grains de sable par exemple) en vue de leur évacuation par une ouverture centrale 107 raccordée à un conduit 200.

Le conduit 200 aboutit à un collecteur 201 recevant aussi un conduit 202 qui est raccordé à une ouverture ou "skimmer" 108 prévue au niveau de l'eau 106 et fonctionne comme un trop-plein.

Le collecteur 201 reçoit également un conduit 203 aboutissant à un tuyau flexible (non représenté) prolongé par une brosse aspirateur de type bien connu.

Enfin, un conduit 204 correspond à une source sous pression, privée ou faisant partie d'un réseau de distribution publique.

Des vannes respectivement 205, 206, 207 et 208 permettent d'assurer l'écoulement dans le conduit correspondant ou d'isoler le reste de l'installation, notamment à l'occasion de travaux.

Le collecteur 201 aboutit à un préfiltre 210 destiné à retenir les plus grosses particules et impuretés avant une pompe de circulation 211 mue par un moteur 212.

La pompe 211 refoule l'eau pompée dans un conduit 213 qui aboutit à un vase d'ionisation 214 dans lequel se trouvent deux électrodes 215 et 216. Le vase d'ionisation 214 est raccordé par un conduit 217 à une vanne multi-voies 218 commandée par une poignée de manoeuvre 219.

La vanne multi-voies 218 est bien connue en soi et ne sera pas décrite en détail. Selon la position de la poignée 219, l'eau arrivant par le conduit 217 est dirigée vers différentes destinations. Elle reçoit, en plus du conduit 217, quatre conduits : deux, 220 et 221, sont raccordés à un filtre 222 et sont destinés respectivement à conduire l'eau de la vanne 218 vers le filtre pour sa filtration et à conduire l'eau du filtre 222 vers la vanne 218 après filtration. Un autre conduit 223 aboutit a un égoût ou autre système d'évacuation 224. Le dernier conduit, 225 aboutit à une ouverture 110 par laquelle l'eau mise en circulation par la pompe 211 arrive dans la piscine 100.

Un coffret de commande 300 reçoit une alimentation électrique à partir d'une source 301 qui peut être un générateur privé ou une prise d'un réseau de distribution publique, en monophasé, en triphasé etc., mais toujours avec une prise de terre 302 pour des raisons de sécurité bien connues.

On utilise le mot "alimentation" pour désigner l'ensemble de composants et circuits électriques bien connus de l'homme de métier (et à sa disposition sur le marché) qui concourrent à donner au courant électrique de fonctionnement les caractéristiques qui lui sont nécessaires, à partir d'un courant d'entrée : transformateur, redresseur, régulateur etc.

Le coffret 300 contient tous les composants électriques nécessaires et qui ne seront pas décrits en détail, ainsi qu'un mécanisme de temporisation 303 également connu en soi. Une ligne électrique 304 aboutit au moteur 212 afin que la pompe 211 soit mise en marche et arrêtée périodiquement, sous le contrôle du mécanisme 303. Ce système est connu en lui-même et son fonctionnement se conçoit aisément. Lors de l'installation, le mécanisme 303 est pré-réglé en fonction des conditions locales et peut être ajusté en fonction de divers paramètres.

Selon l'invention, un ensemble de contrôle 400 place dans un boîtier 401 est intercalé entre le coffret de commande 300 et les électrodes 215-216. Une liaison 305 composée de fils d'alimentation 306-307 et d'un fil de terre 308 alimente l'ensemble de contrôle 400 lorsque le mécanisme de temporisation 303 met sous tension le moteur 212 de la pompe 211, c'est-à-dire quand l'installation est.en fonctionnement.

L'ensemble de contrôle 400 qui sera décrit en détail plus loin, comporte un redresseur si la source 301 fournit un courant alternatif, car il faut un courant continu pour donner une polarité aux électrodes dont l'une devient anode ( + ) et l'autre cathode (-), ainsi que cela est bien connu. Il comporte aussi des moyens qui adaptent la tension d'alimentation des électrodes 215-216 à la valeur de la résistance instantanée existant entre lesdites électrodes 215-216 de telle sorte que le courant conserve aussi précisément que possible la même valeur.

Pour obtenir ce fonctionnement, on peut utiliser un instrument de mesure, par exemple un capteur tel qu'un ohmmètre, convenablement placé et relié à une alimentation, le tout associé à un régulateur, afin d'obtenir la constance du courant et la variation de la tension corrélativement à la résistance mesurée.

Mais il est plus simple de prévoir un organe de réglage du courant à une valeur donnée et de prévoir une alimentation à tension de sortie variable entre deux limites, car alors la tension s'établit automatiquement, sans qu'il soit nécessaire de procéder à une mesure.

Comme l'émission d'ions métal a partir des électrodes est une fonction directe du courant, on obtient de la sorte une émission constante malgré l'usure des électrodes et malgré les différences de résistance qui peuvent intervenir de manière aléatoire à tout instant.

Compte tenu des conditions locales (notamment en fonction du volume d'eau de la piscine 100), on effectue un réglage lors de la mise en service de l'installation et désormais on a la certitude que l'ionisation sera constante et parfaitement conforme aux prescriptions de l'installateur.

Quoiqu'il arrive, même pendant une absence prolongée de l'utilisateur, l'installation s'adapte aux circonstances importantes, c'est-à-dire celles qui ont une influence sur l'ionisation. L'utilisateur n'est plus contraint d'utiliser des produits chimiques, de procéder à des vérifications et mesures incessantes. Si la température ambiante chute brusquement, s'il survient un orage, s'il y a interruption et reprise de la distribution d'eau ou tout autre événement pouvant avoir une influence sur la résistance opposée au passage du courant entre les électrodes, l'ionisation restera inchangée.

Il s'agit là d'un confort et d'une sécurité d'un degré encore jamais atteints.

Lors de la mise en service de la piscine 100, l'eau arrive directement de la conduite 204 et doit atteindre son niveau normal avant d'être recyclée.

Jusqu'à maintenant, même avec un vase d'ionisation, il faut utiliser des produits chimiques tant que, par recyclage et passages répétés de l'eau dans le vase d'ionisation, la concentration des ions n'a pas atteint un minimum. On comprend qu'il s'agit là d'un inconvénient majeur et qui est d'autant plus grave que la piscine est grande.

Conformément à l'invention, on obtient rapidement l'ionisation optimum pour une installation donnée en faisant fonctionner l'installation en marche forcée : on règle la valeur du courant au maximum possible, sans tenir compte de la resistance réelle entre les électrodes, et quelles que puissent être ses variations. L'ionisation est bien entendu intense et permet le remplissage de la piscine 100 sans aucun ajout de produit chimique.

Quand la concentration voulue est atteinte, on diminue la valeur du courant pour que l'ionisation de maintenance normale soit celle désirée en fonctionnement continu stabilisé.

On prévoit, par exemple, une tension de sortie variable entre 1 et 32 volts, appliquée aux électrodes 215 et 216 selon la résistance effective existant entre elles. Pour des raisons techniques et vi-à-vis de la sécurité, les électrodes 215 et 216 sont alimentées en basse tension. La source 301, elle, est généralement à tension plus élevée : 110 ou 220 volts. Quant au courant, une plage de réglage s'étendant de 1 à 900 milli-ampères permet de s'adapter pratiquement à tous les cas susceptibles de se présenter.

En marche forcée, on règle le courant à 900 milli-ampères par exemple pendant deux jours. Après vérification que l'ionisation est correcte, on ramène le courant à 150 milli-ampères, sachant que ce courant sera toujours maintenu automatiquement quoiqu'il arrive et que l'on considère donc cette valeur comme celle qui procure l'ionisation optimum d'un site donné.

L'ensemble 400 peut comporter un dispositif d'alerte ou d'avertissement si le courant de consigne n'est pas respecté et cela est d'une très grande importance pour la sécurité de l'utilisateur car cela révèle une anomalie de fonctionnement, par exemple une usure excessive des électrodes 215 et 216 qui doivent par conséquent être remplacées par des neuves.

Sur la figure 1, on voit que le vase d'ionisation 214 est situé en aval de la pompe 211 et en amont du filtre 222. Les électrodes 215 et 216 contiennent du cuivre qui provoque la floculation des impuretés et des particules. La plus grande partie des ions cuivre émis, à raison d'environ 0,5 PPM, forment avec les ions OH de l'eau des molécules d'hydroxyde de cuivre insoluble qui se comporte comme un colloïde et qui attire et fixe toutes les particules en suspension en formant des flocs qui sont retenus par le filtre 222, généralement du type à sable.

L'autre partie des ions cuivre traverse le filtre 222 et atteint la piscine 100 sous forme de cuivre actif dont les propriétés algicides bien connues sont dues à la substitution de l'ion métal dans les chaînes protéiques des micro-organismes.

Les électrodes 215 et 216 contiennent aussi de l'argent dont les ions émis à raison de 10 PPB environ, ont un effet de stérilisation par destruction des virus et bactéries provenant des corps étrangers, de la pluie et des baigneurs eux-mêmes.

Selon l'état de la technique, on utilise des électrodes entièrement en cuivre dans lesquelles on a piqué de fins éléments d'argent distincts en proportion voulue pour qu'il y ait dégagement des quantités indiquées ci-dessus. Ces électrodes sont coûteuses et peu efficaces car le dégagement d'argent n'est pas aussi uniforme qu'il le faudrait.

Conformément à l'invention, on utilise ici des électrodes 215 et 216 formées par un alliage total cuivre-argent au titre voulu.

Etant donné que la plage de réglage de la valeur du courant est très étendue, le dispositif conforme à l'invention est adaptable à toutes les installations existantes. Quant au vase d'ionisation, le seul problème de son adaptabilité proviendrait du diamètre des conduits 213 et 217 et on sait facilement résoudre ce qui n'est qu'un travail mineur. Si l'on doit équiper un bassin de très grande capacité, on peut être amené à prévoir au moins deux vases d'ionisation ou un vase d'ionisation plus grand, contenant plus de deux électrodes. L'installation qui vient d'être décrite convient pour des bassins ayant une capacité de 1 à 3.000 mètres cubes.

Non seulement l'invention s'applique à toutes les piscines mais aussi à d'autres installations : bains à remous, toutes applications hydrothérapiques, entraînement des bébés à la natation etc.

Les électrodes 215 et 216 ont été représentées sous leur forme la plus courante : cylindrique mais on peut envisager d'autres formes adaptées à des formes particulières des vases d'ionisation ou pour des conditions spéciales de l'émission ionique : électrodes sphériques, cubiques, ovoïdes, oblongues à section polygonale etc.

Selon une caractéristique de l'invention, on procède à deux émissions distinctes et non à une seule.

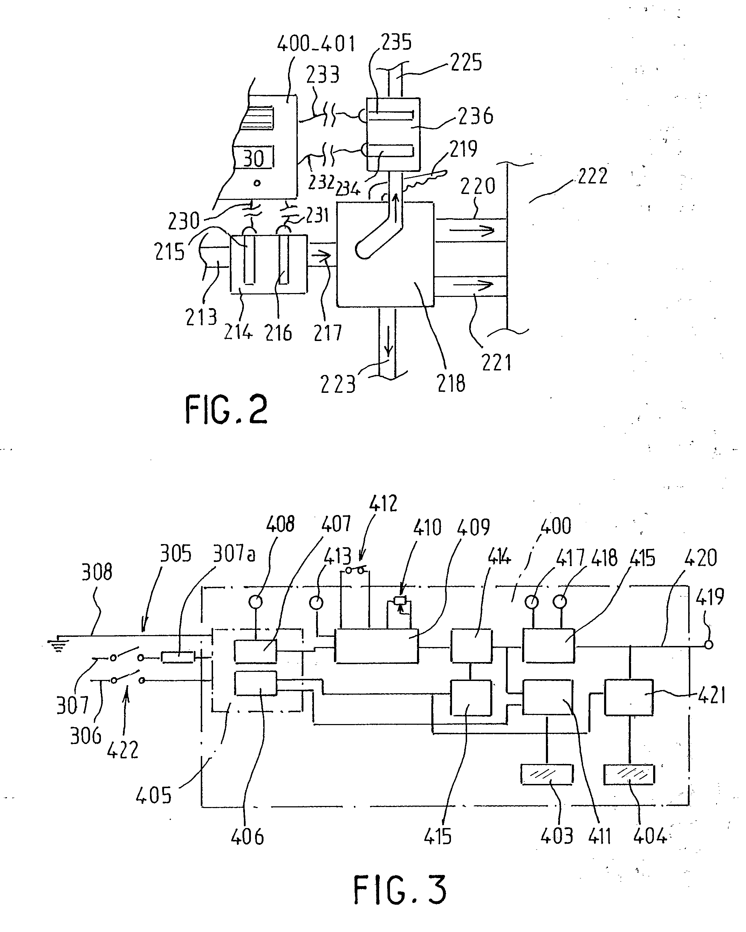

En se reportant à la figure 2, on voit que l'ensemble 400 placé dans le coffret 401 a d'une part deux lignes d'alimentation 230 et 231 qui aboutissent aux électrodes 215 et 216 du vase d'ionisation 214 et d'autre part deux autres lignes 232 et 233 pour des électrodes 234 et 235 placés dans un second vase d'ionisation 236 placé sur le conduit 225 en aval du filtre 222.

Cette disposition est très intéressante car elle permet d'obtenir une efficacité de l'ionisation inconnue à ce jour. En effet, il devient possible de réaliser les électrodes 215 et 216 en cuivre sans argent et les électrodes 234 et 235 en argent sans cuivre. Chaque jeu d'électrodes a son alimentation propre et l'on peut régler différemment le courant de l'un et de l'autre.

Ainsi, les ions cuivre agissent comme on l'a expliqué plus haut mais les ions argent échappant totalement au filtre 222, sont utilisés en totalité.

Comme il n'y a plus de déperdition dans le filtre 222, on est certain d'obtenir la concentration d'ions argent exactement nécessaire, sans craindre aucune irrégularité.

On remarque sur la figure 2 que les électrodes et les vases d'ionisation qui les contiennent peuvent indifféremment être placés verticalement, horizontalement ou selon toute inclinaison.

Le procédé selon l'invention peut être utilisé avec n'importe quel système de filtration : filtre à sable, à diatomées, avec ou sans cartouche.

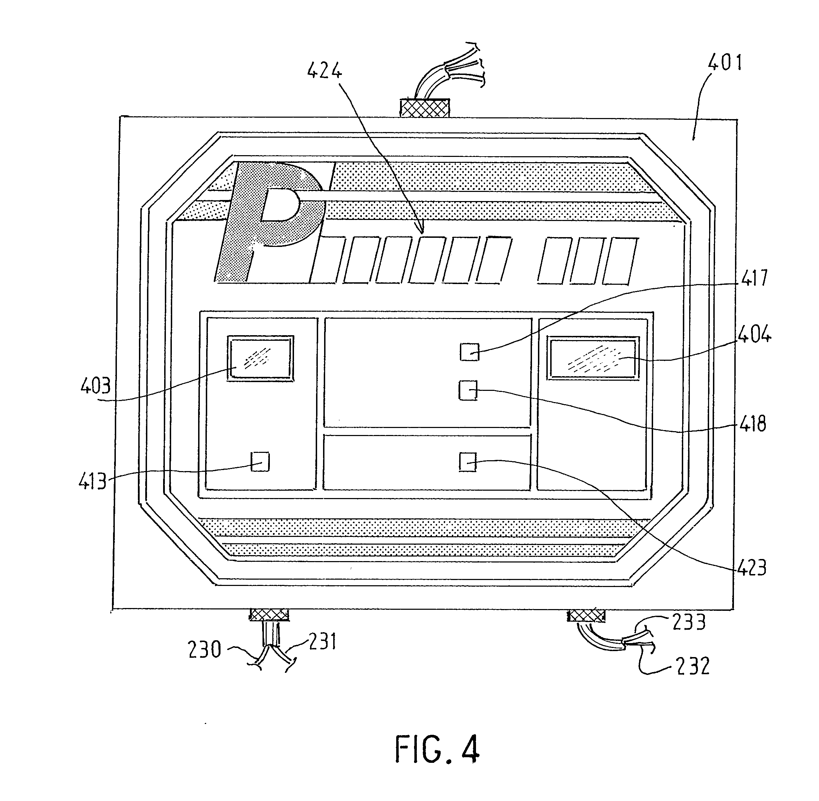

En se reportant maintenant aux figures 3 et 4, on voit comment on peut réaliser concrétement un ensemble de contrôle 400.

Afin que l'utilisateur soit informé des conditions d'usage, le boîtier 401 présente deux afficheurs 403 et 404 sur lesquels deux nombres doivent apparaître : sur l'afficheur 403 apparaît la valeur du courant qui alimente les électrodes, par exemple 150 milli-ampères. Sur l'afficheur 404 apparaît la tension de ce même courant à l'instant donné, par exemple 19 volts.

Il doit y avoir autant d'organes de réglage du courant et autant d'afficheurs qu'il y a de vases d'ionisation alimentés individuellement.

L'ensemble 400 est essentiellement de nature électronique, aussi est-il bon de prévoir deux alimentations électriques séparées selon qu'il s'agit de l'ensemble 400 lui-même ou des électrodes.

Sur la figure 3, on voit que les fils d'alimentation et de terre 306, 307 (muni d'un fusible 307a) et 308 aboutissent à un répartiteur 405 comprenant deux transformateurs 406 et 407. A partir de la tension d'alimentation, 110 ou 220 volts généralement, le transformateur 406 fournit un courant à tension constante de 5 volts pour le fonctionnement de l'ensemble 400 lui-même tandis que le transformateur 407 fournit une tension variable de 1 à 32 volts pour les électrodes.

Au transformateur 407 est associé un voyant lumineux 408 placé sur la façade du boîtier 401 et qui signale, quand il est allumé, que l'ensemble 400 est alimenté.

Un circuit 409 agit sur le courant et sur la tension destinés aux électrodes. Au moyen d'un organe tel qu'un potentiomètre 410, on peut agir sur la valeur du courant sortant du circuit 409 afin de le régler à la valeur optimum souhaitée. Un mesureur 411 vérifie cette valeur et commande l'afficheur 403. Un bouton poussoir 412, de préférence placé sur la façade du boîtier 401 permet d'agir sur le circuit 409 afin d'obtenir le courant maximum, indépendamment de la tension résultant de la résistance existant entre les électrodes, ce qui correspond à ce que l'on a appelé "marche forcée". Un voyant 413 placé sur la façade du boîtier 401 est allumé pendant tout le temps du fonctionnement en marche forcée.

Le courant issu du circuit 409 passe par un inverseur de polarité 414 associé à une base de temps 415. Selon le réglage de la base de temps 415, l'inverseur 414 effectue le changement de polarité des électrodes, par exemple toutes les sept minutes. Ainsi, l'électrode positive (+) appelée anode devient négative (-) dite cathode et vice versa. Cette inversion de polarité permet d'éviter les phénomènes d'entartrage et d'encrassage et favorise le rendement de l'installation.

Un circuit 415 est associé à deux voyants 417 et 418 placés sur la façade du boîtier 401 qui sont allumés ou éteints selon que l'électrode 215 est positive et négative pendant que l'électrode 213 est négative ou positive. Ce renseignement ne sert vraiment à l'utilisateur que pour lui montrer que l'inversion de polarité fonctionne correctement. En revanche, s'il y a deux vases d'ionisation, l'un pour le cuivre en amont du filtre 222 et l'autre pour l'argent en aval de ce filtre, les deux voyants peuvent être allumés en même temps pour signaler le bon fonctionnement des deux vases d'ionisation, l'un pour la floculation (le cuivre) et l'autre pour la stérilisation (l'argent).

Après le circuit 415, le courant quitte l'ensemble 400 et l'on a figuré en 419 une jonction avec les fils 230 et 231.

Le conducteur 420 qui relie le circuit 415 à la jonction 419 est relié à un voltmètre 421 associé à l'afficheur 404 sur lequel apparaît la tension au moment de l'observation.

Enfin, la mise sous tension ou l'isolement de l'ensemble 400 est obtenu au moyen d'un interrupteur 422, par exemple commandé par un bouton poussoir 423 placé sur la facade du boîtier 401.

Sur la figure 4, on a représenté un exemple de réalisation de la façade du boîtier 401 et l'on y voit les différents organes qui viennent d'être décrits. La partie supérieure de la façade peut être réservée à l'apposition d'une marque, d'un emblème etc. notamment à l'emplacement marqué par des parallèlogrammes 424.

Selon l'invention, on adjoint à l'installation un pH-mètre incorporé afin que l'utilisateur puisse avoir une lecture directe et permanente du pH, en prévoyant un affichage (non représenté) sur la façade du boîtier 401.

Il est en effet fondamental de connaître et de maîtriser la valeur du pH de l'eau d'une piscine et cette disposition permet de supprimer les contrôles fastidieux au moyen de réactifs et nécessitant des prélèvements quotidien.

La présence d'un pH-mètre incorporé à l'ensemble 400 permet de rendre automatique le maintien du pH désiré en associant ce pH-mètre à une dispositif (non représenté mais à la portée de l'homme de métier) de commande de pompes doseuses du commerce.

Traditionnellement, les électrodes utilisées pour l'ionisation de liquides sont cylindriques et placées en lignes.

Or, une observation attentive du phénomène d'émission des ions a conduit l'inventeur à des constatations surprenantes, permettant de parvenir à des perfectionnements importants.

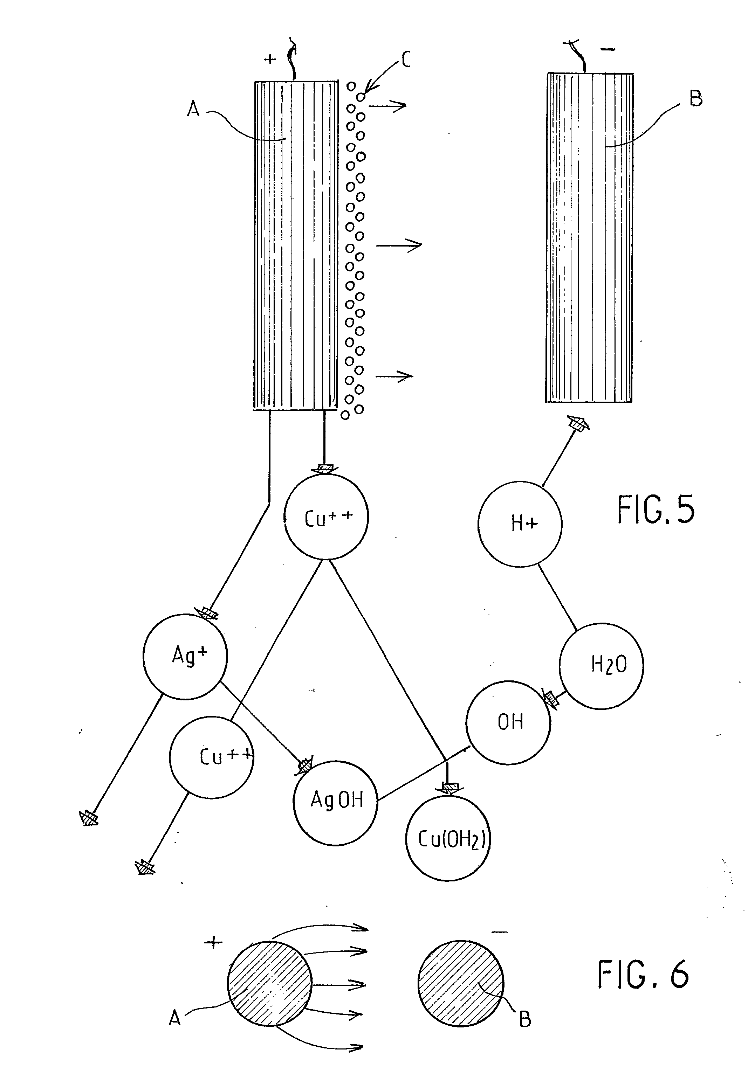

En se reportant aux figures 5 et 6, on voit deux électrodes classiques A et B cuivre-argent plongées dans de l'eau. L'électrode A est positive, c'est une anode. L'électrode B est négative, c'est une cathode. Après inversion de polarité (par exemple toutes les sept minutes), l'électrode A sera une cathode negative et l'électrode B sera une anode positive. Les explications ci-après sont bien entendu valables mutatis mutandis pour une polarité inverse.

L'anode positive A émet des ions C par arrachement dû au champ électrique créé par le passage du courant dans le milieu conducteur séparant les électrodes. Ces ions ne se dirigent pas directement vers la cathode négative B car le phénomène est assez complexe et on a schématisé sur la figure 5 les combinaisons qui se produisent, combinaisons que l'on a déjà évoqué plus haut.

Bien que la cathode ne soit pas totalement "inactive", on peut admettre, pour la démonstration, que le schéma de la figure 6 est proche de la réalité.

On a figuré par des flèches l'émission des ions C et bien que l'émission ne soit pas strictement limitée au demi-périmètre de l'anode A, on comprend que deux électrodes ne peuvent créer qu'un seul champ électrique générant une certaine émission à partir de l'anode et aucune émission à partir de la cathode. Par convention on admet ici qu'un système à deux électrodes a une "efficacité" d' arrachement d'ions de 0,5.

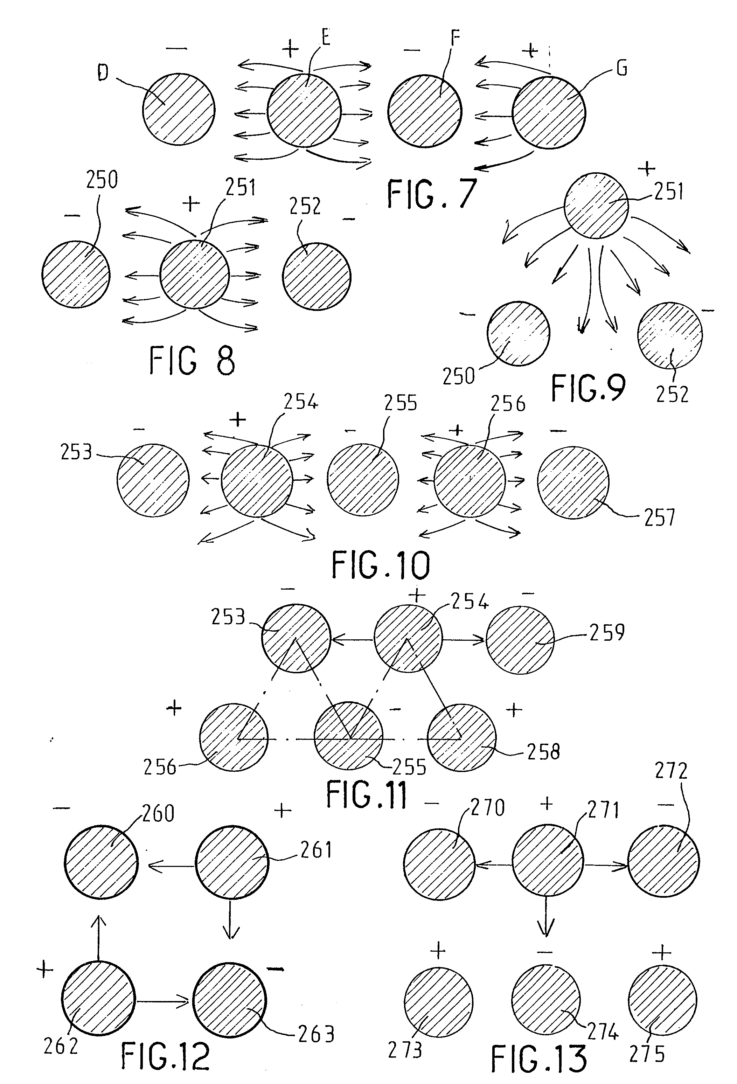

Lorsque l'on a besoin d'une émission d'ions plus importante, c'est-à-dire quand on doit réaliser une installation pour un bassin de grand volume, on utilise quatre électrodes à polarité alternée (et bien entendu inversée périodiquement), comme cela est représenté sur la figure 7. Selon la convention énoncée ci-dessus, un tel système a une efficacité de 1,5, soit trois fois plus importante que celle d'un système à deux électrodes. En effet, l'anode E émet selon toute sa surface, d'une part vers la cathode D et d'autre part vers la cathode F pendant que l'anode G émet vers la cathode F.

On peut, ainsi, réaliser des systèmes à quatre, six, huit, dix électrodes, etc.

On peut ainsi dresser le tableau ci-après :

| Nombre d'électrodes | Efficacité d'arrachement |
|---|---|
| 2 | 0,5 |
| 4 | 1,5 |
| 6 | 2,5 |
| 8 | 3,5 |
| 10 | 4,5 |
| 12 | 5,5 |
| 14 | 6,5 |
| etc. | etc. |

On remarque tout de suite que l'efficacité différentielle va en diminuant et qu'elle est maximale entre les systèmes à deux et à quatre électrodes (300 %).

Or, en ce qui concerne les piscines, 35 % d'entre elles ont un volume de 5 à 70 m3 pour lesquelles il faut un système à deux électrodes; 50 % ont un volume de 70 à 100 m3 pour lesquelles il faut un système à quatre électrodes. En d'autres termes, 85 % des piscines doivent être équipées avec un système soit à deux, soit à quatre électrodes.

Le saut brusque d'efficacité a pour conséquence que beaucoup de piscines sont "sous ionisées" et d'autres sont "sur ionisées".

Exemple : pour ioniser une piscine de 40 à 70 m3 avec deux électrodes, il faut plus de deux semaines et parfois un mois en adoptant une ionisation permanente jour et nuit en vue d'obtenir une concentration de 0,5 PPM de cuivre pour une eau normalement conductrice. Pendant une période aussi longue, il est indispensable de compenser l'insuffisance de protection par l'emploi de produits chimiques (essentiellement du chlore). Avec une eau dite "douce" c'est-à-dire à moyenne concentration en sels minéraux (souvent du carbonate de calcium), il faut plus d'un mois pour obtenir difficilement 0,3 PPM d'ions cuivre.

Avec une eau très "douce", c'est-à-dire à faible concentration (moins de 0,6 gramme par litre) en sels minéraux, il est pratiquement impossible d'obtenir une concentration discernable.

Autre exemple avec une piscine de 70 à 90 m3 nécessitant quatre électrodes : en un ou deux jours, suivant la minéralité de l'eau, la concentration en cuivre atteint 0,8, voire 1 ou 1,5 PPM au lieu de 0,5. Il faut compter deux semaines pour faire baisser cette concentration, ce qui signifie qu'il faut arrêter l'installation, situation incompréhensible et inquiétante pour un utilisateur d'attention moyenne à qui on l'impose à chaque remise en route (chaque printemps par exemple).

On vient de montrer que les connaissances actuelles de l'homme de métier ne lui permettent pas d'obtenir une adéquation convenable d'un système d'ionisation et d'une piscine pour toute la gamme des capacités rencontrées couramment.

Conformément a l'invention, on utilise un système à trois électrodes, groupées soit comme indiqué sur la figure 8, soit comme indiqué sur la figure 9.

Sur la figure 8, les trois électrodes 250, 251 et 252 sont respectivement une cathode (-), une anode (+) et une autre cathode (-). Ainsi, l'anode 251 émet à la fois vers la cathode 250 et vers la cathode 252, soit une efficacité de 1 selon la convention ci-dessus.

Il en est de même avec le cas de la figure 9 mais on a observé, sans pouvoir l'expliquer tout à fait, que la disposition de la figure 9, selon laquelle les électrodes sont placées aux sommets d'un triangle équilatéral virtuel, procure une ionisation particulièrement régulière et constitue une solution privilégiée.

Après inversion des polarités, on aura une anode 250, une cathode 251 et une autre anode 252 ce qui procurera encore une efficacité de 1 puisque les deux "demi" anodes émettront ensemble vers la cathode unique.

On a alors poursuivi les études des systèmes à nombre impair d'électrodes pour s'apercevoir que leur rendement est bien meilleur que celui des systèmes à nombre d'électrodes pair.

Sur la figure 10, par exemple, on voit un système à cinq électrodes en lignes 253, 254, 255, 256 et 257. On comprend que les deux anodes 254 et 256 émettent vers les cathodes 253, 255 et 257, soit une efficacité de 2 qui demeurera après inversion de polarité puisque l'on aura une anode 255 à efficacité 1 et de "demi" anodes 253 et 257 qui donnent ensemble une efficacité de 1, soit 2 au total.

On a groupé les cinq électrodes 253 à 257 selon un trapèze, c'est-à-dire aux cinq sommets de deux triangles ayant un sommet commun, triangles virtuels et indiqués en trait mixte sur la figure 11.

Le résultat est moins bon qu'avec l'alignement de la figure 10 car si on établit leur polarité comme indiqué sur cette figure, on a deux cathodes 253 et 255 et trois anodes 254, 256 et 258 et l'on voit que l'on a deux anodes voisines : 254 et 258. On ré-équilibre le système en ajoutant une sixième électrode 259 à polarité négative de cathode pour aboutir, finalement, à une disposition de six électrodes (nombre pair) selon deux lignes et en quinconces, l'ensemble ayant en plan la forme d'un parallèlogramme.

On voit qu'avec la polarité indiquée, l'anode 254 émet vers trois cathodes 253, 259 et 255 et les anodes 255 et 258 respectivement vers les cathodes 253-255 et 255-259. L'inversion de polarité conserve exactement la même efficacité d'arrachement d'ions.

En groupant les électrodes en nombre impair au lieu des les grouper en nombre pair comme cela est le cas jusqu'à aujourd'hui, on obtient une bien meilleure répartition d'efficacité puisque leurs valeurs différentielles sont plus régulières :

| Nombre d'électrodes | Efficacité d'arrachement |
|---|---|
| 3 | 1 |
| 5 | 2 |
| 7 | 3 |
| 9 | 4 |
| 11 | 5 |
| 13 | 6 |
| etc. | etc. |

Si l'on compare les dispositions des figures 10 et 11 d'une part et les tableaux d'efficacité avec électrodes en nombre pair et en nombre impair, on voit que, finalement, l'invention a deux modes de réalisation essentiels : ou bien le nombre d'électrodes est impair et il est préférable de les placer en ligne, sauf dans le cas exceptionnel où le nombre d'électrodes est de trois, auquel cas on préférera la disposition en triangle de la figure 9; ou bien on désire placer les électrodes autrement qu'en ligne et, par exemple, sur au moins deux lignes, selon un cercle, selon un polygone etc. auquel cas il est meilleur d'adopter un nombre d'électrodes pair.

Cela apparaît bien sur la figure 12 qui représente le cas où quatre électrodes (nombre pair) 260, 261, 262 et 263 sont placées aux quatre angles d'un carré virtuel.

Les flèches montrent que les deux anodes 261 et 262 émettent vers les deux cathodes 260 et 263 donnant ainsi au système une efficacité de 2 alors que la disposition classique en ligne (voir tableau des nombres pairs) donne une efficacité de 1,5 pour quatre électrodes.

Sur la figure 13, on a représenté un système à six électrodes (nombre pair) 270, 271, 272, 273, 274 et 275 sont placées en deux lignes mais pas en quinconce, contrairement au cas de la figure 11. L'expérience montre que cette disposition a un rendement un peu inférieur à celui du même système avec électrodes en quinconce, probablement en raison du fait que le champ électrique est plus dispersé avec la disposition de la figure 13.

Les systèmes à nombre d'électrodes impair donnent une solution beaucoup plus souple au problème de l'adaptation d'une installation conforme à l'invention à des bassins de différentes capacités. Pour les faibles volumes (moins de 70 m3) leur efficacité est parfaite, l'ionisation est atteinte rapidement, même en eau "douce" et "très douce", ce qui est une performance jamais atteinte à ce jour. A partir de 70 m3, on économise une électrode tout en ayant une meilleure ionisation grâce au bon équilibre des émissions d'ions.

On peut disposer les électrodes en cercle (c'est-à-dire selon un polygone virtuel) et en prévoir au moins une autre à l'intérieur du cercle.

Généralement, on prévoit un écartement de quarante millimètres entre les axes des électrodes, lesquelles ont actuellement un diamètre de vingt millimètres, ce qui donne un écartement minimum lorsque les électrodes sont neuves de vingt millimètres mesurés linéairement de surface à surface. Il faut remplacer les électrodes quand leur diamètre n'est plus que de cinq millimètres environ, leur écartement étant alors d'environ trente cinq millimètres, ce qui est presque le double de l'écartement d'origine.

Indépendamment de la matière dont sont faites, les électrodes, elles comportent actuellement une tige centrale conductrice immobilisée dans un logement central et qui sert aussi de liaison permanente avec un bouchon isolant, la liaison entre la tige centrale et le fil électrique d'alimentation se faisant par une rondelle solidaire du fil et fixé à la tige centrale au moyen d'un écrou coopérant avec un pas de vis de ladite tige.

Cet ensemble est compliqué à manipuler parce qu'il faut desserrer l'écrou de blocage lors de chaque changement d'électrode et que cet écrou est conducteur et parcouru par le courant d'alimentation. Comme le vase d'ionisation est toujours situé en milieu très humide, voire réellement mouillé, ces manipulations sont extrêmement dangereuses et inquiétantes pour un utilisateur peu averti des travaux manuels. Naturellement, il est recommandé d'ouvrir l'interrupteur qui contrôle l'arrivée du courant à l'installation, mais si l'utilisateur oublie cette précaution, il est soumis à un grave danger que la basse tension ne peut pas à elle seule éliminer.

Selon la présente invention, on élimine tout élément intermédiaire conducteur entre l'électrode et une fiche de raccordement amovible.

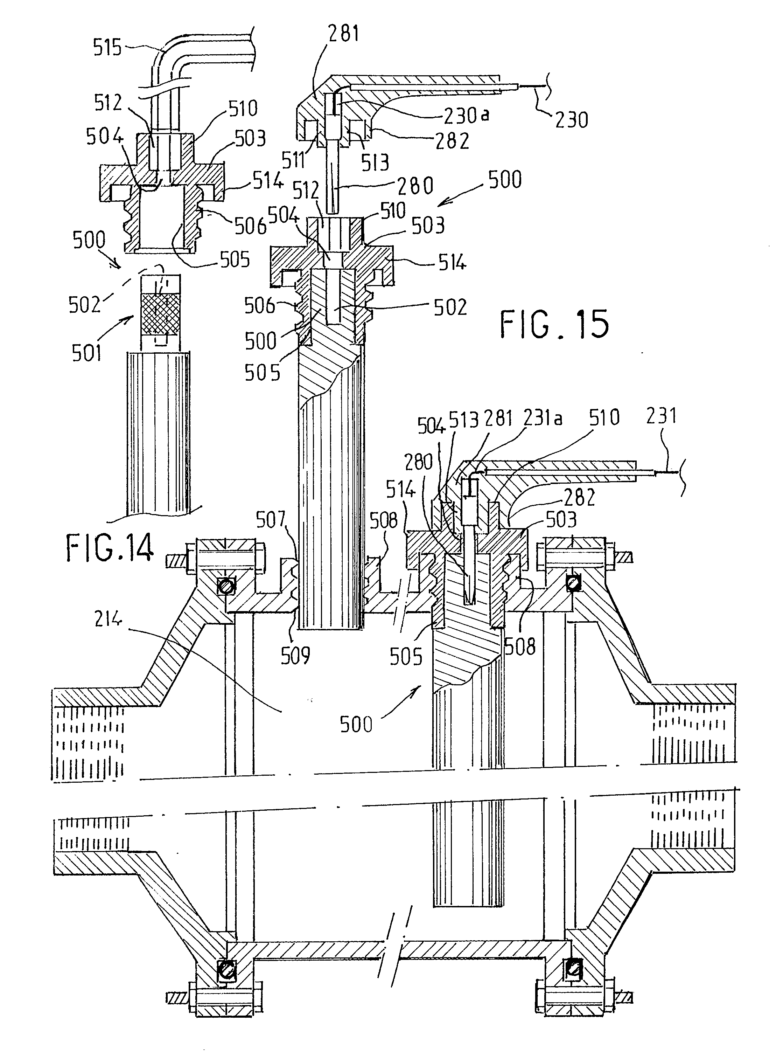

En se reportant à la figure 14, on voit une électrode 500 conforme à l'invention supposée de forme oblongue et cylindrique. Elle comprend une partie supérieure 501 de plus petit diamètre molletée extérieurement pour créer une surface d'accroche dont l'utilité sera explicitée plus loin. En outre, elle présente un logement 502 qui débouche à une extrémité de l'électrode. On verra ci-après que la profondeur de ce logement 502 est indifférente de sorte qu'il pourrait s'agir d'un trou central s'étendant sur toute la longueur de l'électrode et, alors, débouchant à ses deux extrémités.

L'électrode 500 comporte aussi un support 503 en matière synthétique isolante, surmoulé sur la partie supérieure 501 afin d'en être rendu solidaire. Le molletage garantit l'immobilisation du support 503 par rapport à l'électrode 500 pour que l'un ne puisse pas tourner par rapport à l'autre.

Sur la figure 15, on voit que, par ailleurs, les fils d'alimentation électrique 230-231 ont une extrémité 230a et 231a dénudée et fixée à une fiche mâle 280, par exemple du genre présentant deux ou trois lames déterminées par une fente et cambrées transversalement pour donner à la fiche une élasticité radiale. Ces fiches sont souvent appelées "fiches bananes".

L'extrémité dénudée du fil et un segment de sa longueur ainsi qu'une partie de la fiche mâle 280 sont noyés dans une masse isolante surmoulée 281, comme cela est connu en soi.

Pour alimenter l'électrode, il suffit d'engager la fiche mâle 280 dans le logement 502 car elle y reste immobilisée par les frottements engendrés par l'effort élastique radial de la fiche. Tous moyen donnant le même effet est bien entendu équivalent.

Afin que la fiche mâle 280 puisse pénétrer dans le logement 502 de l'électrode 500, le support 503 présente un trou ou passage central 504 situé au-dessus d'un manchon inférieur 505 constituant la partie du manchon 503 fixée à l'électrode nue et muni extérieurement d'un pas de vis, par exemple à section trapézoïdale 506 destiné à coopérer avec un taraudage 507 prévue à l'intérieur d'une collerette 508 surmontant un orifice 509 du vase d'ionisation 214.

Pour mettre l'électrode en place sur le vase d'ionisation, on l'engage par l'orifice 509 et on visse le support 503 grâce au pas de vis 506 et au taraudage 507. Ensuite, on engage la fiche mâle 280 en manipulant non plus une pièce conductrice mais la masse isolante 281.

Pour assurer l'immobilisation efficace de la fiche mâle 280 dans le logement 502 de l'électrode 500, la masse 281 présente une jupe 282 qui, par déformation élastique, vient recouvrir une partie supérieure annulaire 510 du support 503. En outre, la jupe 282 entoure une partie centrale 511 surmoulée sur la fiche mâle 280 et qui se place avec un léger serrage dans le creux central 512 de la partie annulaire 510.

Pour parfaire encore le maintien de la fiche mâle 280 dans le logement 502 de l'électrode 500, le support 503 possède une coiffe élastique 514 qui doit recouvrir la colerette 508 du vase d'ionisation.

Tous les mouvements nécessaires à la mise en place et au retrait des électrodes, sont des mouvements simples qui n'exigent pas l'emploi d'outils et qui permettent de ne saisir que des pièces isolantes.

Néanmoins, on a prévu que le contour intérieur du creux 512 est à facettes planes selon des normes correspondant aux dimensions standards d'un outil mâle tel qu'une clé 515 constituée par une tige à section polygonale coudée. De la sorte, on met l'électrode en place dans l'orifice 509 du vase d'ionisation 214, puis on engage la clé 515 dans le creux 512 et on effectue le vissage serré du pas de vis 506 dans le taraudage 507 en se servant de la clé 515 et cette liaison est déjà étanche si le filetage est correct et la forme trapézoïdale du pas de vis contribue à cette étanchéité. Celle-ci est achevée par le recouvrement de la collerette 508 par la coiffe 514.

Ensuite, on enfonce la fiche mâle 280 dans le trou 502 et on assure le blocage grâce aux coincements de la coiffe 514 sur la collerette 508, de la jupe 282 sur la partie annulaire 510 et de la partie centrale 513 dans le creux 512.

**Revendications**

1- Procédé de traitement permanent d'un liquide tel que de l'eau en vue de sa purification par émission in situ d'ions métal à partir d'électrodes plongées dans un courant de ce liquide et portées à des potentiels électriques différents, caractérisé en ce que l'on fait varier la tension électrique entre les électrodes (215-216 et 234-235) en fonction de deux paramètres qui sont respectivement la résistance électrique instantanée du liquide et la distance linéaire relative séparant les surfaces des électrodes en présence (215-216 et 234-235), afin qu'à chaque instant la tension électrique entre les électrodes (215-216 et 234-235) soit telle que le courant reste sensiblement constant et que l'émission d'ions métal dans le liquide reste sensiblement égale à une valeur prédéterminée.

2- Procédé selon la revendication 1, caractérisé en ce que l'on fixe une valeur au courant électrique et que l'on fait varier sa tension en fonction des variations de la résistance existant entre les électrodes (215-216 et 234-235).

3- Procédé selon la revendication 2, caractérisé en ce que pour l'obtention rapide d'une ionisation optimum, on fixe la valeur du courant électrique d'abord au maximum possible, quelle que soit la résistance existant entre les électrodes (215-216 et 234-235) et quelles que soient les variations de cette résistance, puis que l'on diminue la valeur du courant électrique pour la ramener à celle qui est nécessaire au maintien de l'ionisation optimum dans les conditions d'utilisation normales et pour des valeurs médianes de la résistance et de la tension électriques.

4- Procédé selon la revendication 1, caractérisé en ce que l'on abaisse la tension d'un courant électrique d'arrivée au moyen d'une alimentation à réglage automatique entre deux valeurs limites correspondant à une valeur sensiblement constante du courant résultant appliqué aux électrodes (215-216 et 234-235) et dépendant de la valeur instantanée aléatoirement variable de la résistance existant entre les électrodes (215-216 et 234-235).

5- Procédé selon la revendication 1, caractérisé en ce que le liquide étant maintenu en mouvement par extraction de liquide à traiter hors d'une capacité telle qu'un bassin (100) et par introduction corrélative de liquide traité en vue du maintien du liquide à un niveau (106) sensiblement constant dans le bassin (100), le traitement est appliqué en aval d'une pompe (211) destinée à l'adduction de liquide au bassin (100).

6- Procédé selon la revendication 1, caractérisé en ce que les électrodes (215-216) sont faites en un alliage uniforme de cuivre et d'argent dans des proportions qui correspondent à celles désirées pour le traitement du liquide par une seule émission d'ions résultant d'un seul et même courant.

7- Procédé selon la revendication 1, caractérisé en ce que l'on procède à deux émissions d'ions distinctes, une émission avant filtration et une émission après filtration.

8- Procédé selon la revendication 7, caractérisé en ce que l'émission d'avant filtration est réalisée avec des électrodes (215-216) de cuivre sans argent.

9- Procédé selon la revendication 7, caractérisé en ce que l'émission d'après filtration est réalisée avec des électrodes (234-235) d'argent sans cuivre.

10- Procédé selon la revendication 7, caractérisé en ce que les deux émissions d'ions sont obtenues par des jeux d'électrodes (215-216 et 234-235) ayant chacun une alimentation électrique distincte (230-231 et 232-233) avec ses propres caractéristiques de courant.

11- Dispositif pour la mise en oeuvre du procédé ci-dessus, caractérisé en ce qu'il comprend un ensemble de contrôle (400) avantageusement placé dans un boîtier(401) et constitué par des circuits et composants électriques et électroniques reliés d'une part à une source de courant (301) et d'autre part à au moins un jeu d'électrodes (215-216 et 234-235) placé dans au moins un vase dit "vase d'ionisation" (214 et 236) muni d'une entrée et d'une sortie pour un liquide à traiter, cet ensemble (400) comprenant une alimentation (407-409) à tension de sortie automatiquement variable selon la résistance instantanée existant entre les électrodes (215-216 et 234-235), afin que la valeur du courant d'alimentation soit et demeure sensiblement constante.

12- Dispositif selon la revendication 11, caractérisé en ce que les circuits comprennent un organe de réglage (410) de la valeur désirée pour le courant d'alimentation des électrodes (215-216).

13- Dispositif selon la revendication 11, caractérisé en ce que l'ensemble de contrôle (400) comprend des moyens en soi connus (406 et 407-409) destinés à fournir au moins une tension sensiblement constante destinée au fonctionnement propre de l'ensemble (400) et au moins une tension variable destinée à l'alimentation d'électrodes (215-216).

14- Dispositif selon la revendication 11, caractérisé en ce que l'ensemble de contrôle (400) comprend au moins deux branches d'alimentation, l'une aboutissant à au moins une alimentation ayant une tension de sortie sensiblement constante destinée au fonctionnement propre de l'ensemble (400) et au moins une autre aboutissant à au moins une alimentation ayant une tension de sortie variable destinée à l'alimentation d'électrodes (215-216).

15. Dispositif selon la revendication 11, caractérisé en ce qu'il comprend au moins deux vases d'ionisation (214 et 236) placés sur un conduit (213-217-225) d'adduction de liquide à un bassin (100), respectivement en amont et en aval d'un filtre (222).

16- Dispositif selon la revendication 15, caractérisé en ce que le vase d'ionisation (214) placé en amont du filtre (222) contient des électrodes de cuivre sans argent (215-216).

17- Dispositif selon la revendication 15, caractérisé en ce que le vase d'ionisation (236) placé en aval du filtre (222) contient des électrodes d'argent sans cuivre (234-235).

18- Dispositif selon la revendication 11, caractérisé en ce qu'il comporte des moyens de mesure de pH du liquide à traiter.

19- Dispositif selon la revendication 18, caractérisé en ce que les moyens de mesure du pH sont associés à un indicateur et éventuellement à une alarme.

20- Dispositif selon la revendication 18, caractérisé en ce que les moyens de mesure du pH sont associés à au moins un mécanisme tel qu'une électro-vanne contrôlant la distribution, dans le liquide à traiter, de produits relatifs au maintien du pH du liquide à une certaine valeur.

21- Dispositif selon la revendication 11, caractérisé en ce qu'il comporte au moins un vase d'ionisation pour un nombre impair d'électrodes (250-251-252, 253-254-255-256-257).

22- Dispositif selon la revendication 21, caractérisé en ce que les électrodes (250-251-252 et 253 à 257) sont disposées selon une ligne.

23- Dispositif selon la revendication 11, caractérisé en ce qu'il comporte au moins un vase d'ionisation pour au moins trois électrodes (250-251-252).

24- Dispositif selon la revendication 11, caractérisé en ce que les électrodes (250-251-252 et 253-254-255-259-256-255-258 et 260-261-262-263 et 270-271-272-273-274-275) sont disposées aux sommets d'un polygone virtuel.

25- Dispositif selon la revendication 11, caractérisé en ce que les électrodes (253-254-259-256-255-258) sont disposées selon au moins deux lignes parallèles et en quinconce.

26- Dispositif selon la revendication 25, caractérisé en ce que les électrodes (260-261-262-263 et 270 à 275) étant en nombre pair, elles sont disposées selon un parallèlogramme virtuel.

27- Dispositif selon la revendication 11, caractérisé en ce que chaque électrode (500) présente au moins un logement ouvert (502) destiné à recevoir une fiche mâle (280) reliée à un conducteur électrique (230-231).

28- Dispositif selon la revendication 27, caractérisé en ce que le contour de l'électrode présente une symétrie polaire par rapport au logement (502).

29- Dispositif selon la revendication 28, caractérisé en ce que l'électrode ayant une forme oblongue, le logement (502) débouche dans l'axe d'au moins l'une des extrémités de l'électrode (500).

30- Dispositif selon la revendication 11, caractérisé en ce que la partie supérieure (501) de chaque électrode (500) est solidaire d'un support isolant (503) destiné à la relier à un vase d'ionisation (214).

31- Dispositif selon la revendication 30, caractérisé en ce que chaque électrode (500) présente au moins une partie de sa surface extérieure non lisse devant être recouverte par une partie (505) du support (503) qui y est fixée, notamment par surmoulage d'une matière synthétique.

32- Dispositif selon la revendication 30, caractérisé en be que le support (503) possède d'une part un manchon inférieur (505) fixé à l'électrode (500) et dont la face extérieure est munie d'un pas de vis (506) et, d'autre part, une partie supérieure (510) qui est creuse selon un contour correspondant à la section extérieure d'un outil de manoeuvre (515).

33- Dispositif selon la revendication 30, caractérisé en ce que le support possède une partie supérieure annulaire mâle (510) destinée à être recouverte par une jupe élastique (282) de forme correspondante prévue autour d'une fiche mâle (280), sur un embout (281) solidaire d'un conducteur électrique (230-231) relié à la fiche (280).

34- Dispositif selon la revendication 30, caractérisé en ce que le vase d'ionisation (214) présente, pour chaque électrode (500), un orifice (509) surmonté d'une colerette (508) destinée à être recouverte par une coiffe élastique (514) que présente le support d'électrode (503).

FIG.1

EP 0 329 562 A1

FIG.2

FIG.3

FIG. 4

FIG. 5

FIG. 6

FIG. 7

FIG 8

FIG.9

FIG.10

FIG.11

FIG.12

FIG.13

FIG.14

FIG.15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 128 782 (TARN-PURE) * Résumé; figure 1; page 3, ligne 9 – page 4, ligne 28, page 5, lignes 23-35; revendication 5 * | 1-34 | C 02 F 1/46 |
| | --- | | |
| A | FR-A-2 283 698 (SACHS SYSTEMTECHNIK) * Revendications 1-4 * | 1-34 | |
| | ----- | | |

**DOMAINES TECHNIQUES RECHERCHES (Int. Cl.4)**

C 02 F
E 04 H

**Le présent rapport a été établi pour toutes les revendications**

| Lieu de la recherche | Date d'achèvement de la recherche | Examinateur |
|---|---|---|
| LA HAYE | 24-04-1989 | KASPERS H.M.C. |